(19) Europäisches Patentamt / European Patent Office / Office européen des brevets

(11) **EP 2 180 968 B1**

(12) **FASCICULE DE BREVET EUROPEEN**

(45) Date de publication et mention de la délivrance du brevet:
**29.05.2019 Bulletin 2019/22**

(51) Int Cl.:
**B23H 7/06** *(2006.01)*    **B23H 7/04** *(2006.01)*
**B23H 7/18** *(2006.01)*

(21) Numéro de dépôt: **08774673.1**

(22) Date de dépôt: **03.07.2008**

(86) Numéro de dépôt international:
**PCT/EP2008/058543**

(87) Numéro de publication internationale:
**WO 2009/015977 (05.02.2009 Gazette 2009/06)**

(54) **PROCÉDÉ ET DISPOSITIF D'USINAGE PAR ÉLECTROÉROSION**

FUNKENEROSIONSBEARBEITUNGSVERFAHREN UND -VORRICHTUNG

ELECTON DISCHARGE MACHINING METHOD AND DEVICE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.07.2007 CH 12032007**

(43) Date de publication de la demande:
**05.05.2010 Bulletin 2010/18**

(73) Titulaire: **Agie Charmilles SA**
**6616 Losone (CH)**

(72) Inventeurs:
• **TRICARICO, Claudio**
**1260 Nyon (CH)**
• **JAQUES, Fabrice**
**1242 Satigny (CH)**

(74) Mandataire: **Fenner, Seraina et al**
**Georg Fischer AG**
**Amsler-Laffon-Strasse 9**
**8201 Schaffhausen (CH)**

(56) Documents cités:
**EP-A- 1 316 380     JP-A- 55 070 524**
**US-A- 3 857 011     US-A- 3 975 607**
**US-A- 5 824 986**

## Description

La présente invention concerne un procédé et un dispositif d'usinage par électroérosion selon lequel une pièce est usinée au moyen d'un outil sous forme d'un fil électrode selon un front de matière qui recule devant l'outil sous l'effet de décharges érosives. La pièce et l'outil tous deux conducteurs de l'électricité, sont séparés l'un de l'autre par un gap d'usinage. Une séquence cyclique d'impulsions de tension électriques est appliquée entre l'outil et la pièce pour engendrer les décharges érosives. L'outil est mis en mouvement selon au moins un axe par rapport à la pièce. Les décharges érosives sont séparées entre elles par des temps de pause. Une grandeur représentative de la largeur du gap d'usinage est mesurée en temps réel. L'invention s'applique en particulier aux cas où la régulation du processus est rendue difficile en raison des inerties mécaniques. Autrement dit quand certains phénomènes perturbateurs sont trop rapides en comparaison de la bande passante de la boucle de régulation du gap d'usinage via les mouvements des axes de la machine, il est nécessaire de définir des actions correctrices plus rapides.

**Contexte de l'invention** :

On sait que dans un usinage par fil électrode les fils sont soumis à des forces électrostatiques, électromagnétiques, des forces de rappel élastiques, des forces provoquées par la poussée des décharges érosives, par l'écoulement du fluide diélectrique ou par l'apparition de bulles de gaz au sein de ce fluide.

Il est nécessaire non seulement d'assurer la régulation du gap d'usinage mais aussi de veiller à l'équilibre et aux mouvements propres du fil soumis aux forces de l'usinage. Le fil peut transmettre ou amplifier des oscillations de basse fréquence qui provoquent des irrégularités sur la surface usinée, généralement appelées stries. Le fil peut être dévié de sa trajectoire programmée d'une manière sporadique ou persistante si les paramètres de l'usinage sont mal ajustés ou régulés d'une manière inadaptée. On observe couramment qu'un fil électrode en usinage s'incurve entre ses deux guides et impose à la pièce usinée des défauts géométriques sous la forme d'une surface plus ou moins bombée ou creuse.

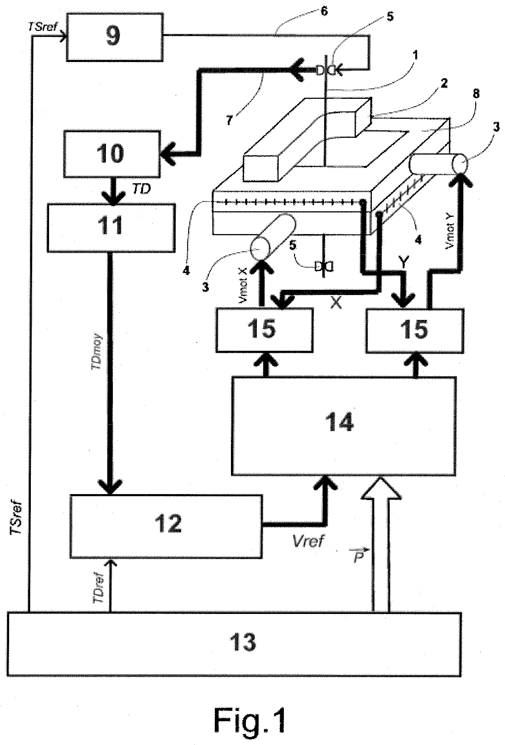

Conformément à des procédés et dispositifs d'électroérosion connus illustrés à la figure 1, le gap d'usinage entre fil 1 et pièce 2 est communément ajusté en temps réel par une boucle de réglage, symbolisée en traits gras, dont la tâche est d'annuler la différence ($TD_{ref}$ - $TD_{moy}$) entre un délai d'attente de consigne $TD_{ref}$ et une moyenne du délai d'attente effectif $TD_{moy}$. La pièce à usiner 2 est assujettie à une table de travail 8, mise en mouvement par les moteurs d'axes 3. Le fil 1 est tendu entre deux guides 5 qui, pour simplifier, lui transmettent également 6 un courant d'usinage issu d'un générateur d'impulsions érosives 9. Les mêmes guides 5 servent dans cette représentation à récupérer la tension effective d'usinage 7 qui est traitée par un dispositif de détection de tension 10. Ce dernier alimente directement un dispositif de calcul 11 du délai moyen d'attente effectif $TD_{moy}$.

La tension d'usinage mesurée en 7 peut être traitée de diverses façons pour en tirer la valeur du délai moyen d'attente $TD_{moy}$ qui est de préférence la grandeur représentative de la largeur du gap d'usinage. Les méthodes les plus usitées consistent à mesurer soit la tension moyenne aux bornes du gap soit le courant moyen qui le traverse; on en tire une valeur de délai d'attente après avoir effectué des corrections en fonction notamment du temps de pause appliqué.

Une méthode plus fiable plus précise et certainement la plus rapide, consiste à détecter directement la fin du délai d'attente $TD$ précédant chaque décharge et à effectuer une moyenne des durées selon divers algorithmes de filtrage.

Une unité de régulation du processus 12 effectue la différence ($TD_{ref}$ - $TD_{moy}$) *et produit une consigne de vitesse scalaire $V_{ref}$ qui tient compte de la courbure du parcours.* Les valeurs de délai d'attente moyen idéal $TD_{ref}$ et de temps de pause entre décharges érosives $TS_{ref}$ sont délivrées par l'unité de commande numérique 13. Cette dernière fournit en outre à l'unité de régulation des mouvements d'axes 14 une grandeur vectorielle $\vec{P}$ nécessaire au suivi de la trajectoire d'outil. Une unité de régulation des mouvements d'axes 14 commande et synchronise les axes entre eux selon les entrées scalaire $V_{ref}$ et vectorielle $\vec{P}$. L'unité 14 répartit les ordres de mouvements en direction de chacun des contrôleurs d'axes 15 qui commandent les mouvements X, Y des axes de la machine par l'intermédiaire des entraînements de moteurs d'axes 3. Les contrôleurs d'axes 15 fournissent des ordres de vitesse *Vmotx, Vmoty* aux moteurs. Les positions atteintes sont mesurées par des règles 4. Pour simplifier, la Fig.1 ne représente que deux axes X et Y. Dans certains cas ladite boucle peut être ouverte pour que les mouvements d'axes s'effectuent à vitesse constante le long d'une trajectoire d'outil.

Il est important de rappeler quelques défauts typiques de l'électroérosion par fil propres aux techniques connues et observés dans des applications où l'on souhaite obtenir la meilleure précision géométrique possible, c'est-à-dire lors des retouches de finition durant lesquelles le fil usine latéralement afin de corriger les imprécisions géométriques issues d'une passe d'ébauche.

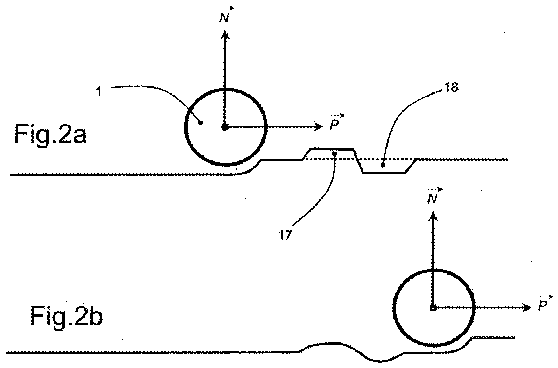

En retouche de finition (Fig.2a,2b) le fil 1 avance dans la direction P approximativement parallèle à la face à rectifier ; lorsqu'il rencontre un excès de matière 17, le régulateur d'avance ne réagit pas immédiatement en raison de l'inertie mécanique des axes de la machine et n'a pas le temps de réduire la vitesse avant que le gap ne diminue, $TD_{moy}$

diminue aussi, provoquant un déficit de l'attraction électrostatique d'où une déviation momentanée du fil qui est repoussé vers l'extérieur de la matière par la pression des décharges érosives dans la direction $\vec{N}$ normale à la face. Par suite l'excès de matière sur la pièce n'est pas éliminé complètement d'où la nécessité d'effectuer plusieurs passes de finition.

Dans le cas inverse, quand le fil rencontre un déficit de matière 18 ou un creux localisé, le régulateur d'avance n'a pas le temps d'imposer une accélération aux axes de la machine avant que le gap n'augmente ainsi que $TD_{moy}$. Cela provoque une attraction électrostatique momentanée du fil vers l'intérieur de la matière dans la direction opposée à $N$. Le déficit de matière sur la pièce ne disparaît pas après la passe de finition et peut même se trouver accentué.

Un phénomène similaire se produit lorsque le parcours d'outil est courbe c'est-à-dire lors des usinages d'angles internes ou externes. Quant le fil aborde un virage concave, il rencontre proportionnellement plus de matière à usiner par incrément d'avance. Le régulateur d'avance ne réagit pas immédiatement et n'a pas le temps de réduire la vitesse des axes avant que le gap ne diminue, $TD_{moy}$ diminue aussi, ce qui provoque une déviation momentanée du fil vers l'extérieur de la matière. La géométrie de l'angle concave est par suite affectée d'un surplus de matière après la passe de finition. Le phénomène inverse se produit dans le cas de l'usinage d'un virage convexe qui subit un enlèvement de matière excessif et ne peut plus être corrigé par les passes suivantes, ce qui est plus grave.

**Exposé de l'état de l'art connu** :

De nombreux auteurs, comme dans les documents US3857011 et US4363949 ont proposé des méthodes permettant de définir à priori les paramètres de la décharge érosive, notamment le temps de pause entre décharges. Ces paramètres dépendent de caractéristiques propres au parcours d'usinage ou de variations macroscopiques de la géométrie de la pièce, prévus et répertoriées à l'avance. Mais, cependant il reste délicat d'anticiper certaines imperfections microscopiques qui perturbent l'usinage et ne sont pas corrigées d'une manière satisfaisante par les divers régulateurs connus.

Le document EP0521193 traite de l'équilibre du fil malgré des variations de la hauteur de la pièce à usiner. La hauteur de la pièce est mesurée au moyen du comptage des décharges érosives sur une certaine distance parcourue. Le résultat de la mesure est d'autant plus exact que la distance parcourue est grande. Par conséquent les résultats des mesures en temps réel sont considérablement retardés. Les actions correctrices corrélées interviennent selon une bande passante qui ne peut pas être plus rapide que celle des axes de la machine. Elles visent principalement à modifier la valeur de consigne de la tension moyenne ; occasionnellement le temps de pause entre décharges.

Le document US5824986 fait état d'une boucle de régulation ayant une vitesse de réaction plus élevée que la boucle de contrôle de l'excursion du fil. La nécessité est reconnue de lancer des actions correctrices plus rapidement que ne peut le faire la boucle de régulation mécanique. Une telle rapidité d'action est rendue possible par l'utilisation d'un capteur qui mesure directement la déviation du fil au voisinage des guides. A partir des mesures fournies par ce capteur il est possible de mettre en oeuvre des boucles de régulation de deux types : l'une agit par l'intermédiaire de la vitesse d'avance des axes l'autre par l'intermédiaire de la fréquence d'usinage. La mise en oeuvre d'un tel capteur s'avère délicate et coûteuse en milieu industriel.

Les documents US6320151 et US6252191 sont assez proches l'un de l'autre du point de vue de l'invention qui nous concerne ici. On peut les interpréter comme des améliorations fonctionnelles des solutions proposées dans le document précédent. Le souci étant de contrôler l'équilibre du fil avec des moyens fiables, robustes et peu coûteux en milieu industriel. Les moyens mis en oeuvre pour mesurer la déviation du fil ne sont que des améliorations relativement simples de ceux déjà disponibles pour régler le processus. Cependant, les actions correctrices décrites dans ces documents sont activées d'une manière intermittente. Cet aspect ne permet pas de garantir que la fréquence de coupure des boucles de réglage ainsi constituées soit supérieure à celle des boucles conventionnelles impliquant des dispositifs mécaniques.

Le document EP1316380 traite d'un problème d'interférence entre une boucle de régulation traditionnelle déterminant la vitesse de déplacement des axes de la machine et les dispositifs de protection contre les ruptures accidentelles du fil. Ces derniers induisent des accroissements du temps de pause entre décharges. Etant donné qu'un générateur de décharges érosives réagit bien plus rapidement qu'un entraînement d'axes, il est beaucoup plus efficace d'agir sur le temps de pause pour protéger le fil d'une rupture. Cependant, les vitesses d'avance étant régulées de sorte à maintenir une valeur cible de tension moyenne aux bornes du gap, les variations du temps de pause perturbent le système de régulation des axes. Par suite une méthode est proposée pour corriger la mesure de la tension moyenne en fonction du temps de pause effectif. Malgré cela, le temps de pause reste un moyen intermittent permettant de protéger le fil contre les ruptures accidentelles. On ne trouve pas dans ce document d'indications visant à utiliser le temps de pause à l'intérieur d'une boucle de régulation permanente laquelle pourrait compléter l'action de la boucle de régulation mécanique.

La présente invention a pour but de remédier aux inconvénients et défauts précités et d'améliorer les dispositifs de l'état de l'art connu.

L'invention est caractérisée à cet effet par les caractéristiques figurant dans les revendications indépendantes et en particulier par le fait que les variations de la largeur du gap d'usinage sont contrecarrées au moyen d'une boucle de réglage dite boucle interne qui pilote des paramètres d'usinage prédéterminés selon une loi qui relie le temps de pause ou valeur de sortie à la grandeur représentative de la largeur du gap d'usinage, ou valeur d'entrée.

On obtient ainsi une régulation très rapide, quasi instantanée du processus d'usinage éliminant les défauts dus aux inerties mécaniques, une très grande précision d'usinage et des possibilités considérables d'adaptation de l'usinage à différents usages.

Selon un mode d'exécution avantageux ladite boucle interne est permanente et pilote la puissance moyenne d'usinage selon ladite loi prédéterminée sans induire aucun mouvement d'axe. De préférence, la grandeur représentative du la largeur du gap d'usinage est le délai d'attente moyen ou durée moyenne du délai d'attente pendant lequel la tension d'amorçage pendant lequel la tension d'amorçage est présente aux bornes du gap avant l'amorçage d'une décharge érosive.

On obtient de ce fait une évaluation aisée et rapide de la largeur du gap d'usinage. Selon un premier mode d'exécution avantageux, la valeur de sortie de la boucle interne diminue quand le délai d'attente moyen est inférieur à un délai de référence et inversement. Ce mode d'exécution permet d'obtenir un usinage de très grande qualité.

La boucle interne est accompagnée par une boucle externe destinée à effectuer une régulation mécanique. Cette boucle externe reçoit de préférence comme variable d'entrée la variable de sortie de la boucle interne et vise à annuler la différence entre le temps de pause et une valeur de consigne, la boucle externe imposant une accélération des axes si ladite différence est positive et inversement.

Ces caractéristiques assurent une vitesse d'usinage accrue tout en bénéficiant d'une grande précision et sûreté d'usinage.

La boucle interne vise à maintenir la puissance moyenne d'usinage à une valeur constante. Cette boucle interne impose avantageusement au temps de pause d'augmenter quand le délai d'attente moyen diminue et inversement.

Grâce à ces caractéristiques on peut tirer un profit maximum de la puissance d'usinage à disposition tout en obtenant une précision d'usinage élevée.

Un quatrième mode d'exécution est caractérisé par une boucle externe destinée à effectuer une régulation mécanique, laquelle vise à annuler la différence entre le délai d'attente moyen et un délai d'attente de référence, la boucle externe imposant une accélération du mouvement dans une direction parallèle à la trajectoire quand ladite différence est positive et inversement. Ce mode d'exécution permet d'éviter le choix délicat d'une valeur fixe de vitesse d'avance et améliore considérablement le rendement global.

Selon un cinquième mode d'exécution, le fil avance parallèlement à la surface d'une pièce de hauteur constante à une vitesse constante adaptée à la courbure de la trajectoire et usine latéralement une épaisseur de couche constante. Ces caractéristiques permettent d'affiner l'état de surface de la pièce sans modifier sa géométrie.

Dans un sixième mode d'exécution, une boucle de régulation mécanique externe supplémentaire fonctionne simultanément à la boucle interne et impose des mouvements de correction selon un vecteur normal à la surface de la pièce. On obtient ainsi une précision d'usinage encore améliorée.

D'autres avantages ressortent des caractéristiques exprimées dans les revendications dépendantes et de la description exposant ci-après l'invention plus en détails à l'aide de dessins qui représentent schématiquement à titre d'exemple des modes d'exécution et des variantes et qui comportent les figures suivantes :

La figure 1 est un schéma bloc d'un système de régulation conventionnel mettant en oeuvre une boucle de régulation mécanique à l'aide des axes de la machine.

Les figures 2a et 2b sont une représentation en coupe d'un fil- électrode usinant latéralement une pièce qui comporte des imperfections géométriques. La figure 2a montre lesdites imperfections avant le passage du fil ; la figure 2b après son passage.

La figure 3 est un schéma bloc des boucles de régulation interne et externe selon l'invention et conforme au 1$^{er}$ et 2$^{ème}$ modes d'exécution.

La figure 4 est un schéma bloc des boucles de régulation interne et externe selon l'invention et conforme aux 3$^{ème}$, 4$^{ème}$, 5$^{ème}$ et 6$^{ème}$ modes d'exécution.

Selon les théories communément admises, le fil trouve son équilibre principalement sous l'effet de trois forces, lesquelles vont déterminer s'il est rectiligne ou incurvé :

- une force d'attraction $F_{att}$ (de signe négatif)
- une force de répulsion $F_{rep}$ (de signe positif)
- une force de rappel mécanique $F_{mec}$ de signe positif ou négatif selon que le fil est courbé vers l'extérieur de la pièce ou vers l'intérieur. Cette force $F_{mec}$ résulte de la tension mécanique appliquée au fil ; elle est orientée selon la flèche du fil courbé entre ses deux guides.

Nous allons considérer les valeurs moyennes de ces forces. En effet, en raison de l'inertie du fil, elles ne deviennent significatives que sous l'effet d'un grand nombre de décharges érosives. Ces dernières sont distribuées cycliquement selon une séquence *(TD, TW, TS)* dont la période totale est d'une durée typique allant de 3 à 30 micro - secondes. Une tension U$_{ign}$ est appliquée aux bornes du gap durant un délai *TD*, dit délai d'attente, de durée aléatoire, à l'issue duquel la décharge érosive commence durant un temps *TW.* La décharge érosive est suivie d'un temps de pause *TS* durant lequel aucune tension n'est appliquée aux bornes du gap d'usinage.

Le fil étant observé à l'équilibre et en dehors des phénomènes transitoires :

$$F_{att} + F_{rep} + F_{mec} = 0$$

$$\left|F_{att}\right| = K_1 \cdot H \cdot U_{rms}^2$$

*H* désigne la hauteur de pièce ; $U^2_{rms}$ le carré de la tension efficace aux bornes du gap ; $K_I$ une constante physique. Cette dernière égalité est acceptable à condition que le gap moyen soit maintenu constant. Dans ces conditions on peut écrire également :

$$\left|F_{rep}\right| = K_2 \cdot f$$

Où *f* désigne la fréquence d'usinage; $K_2$ une autre constante physique.

Cette dernière égalité est évidente en présence de décharges érosives iso - énergétiques. Cependant il ne s'agit pas d'une condition nécessaire. Il suffit que la constante $K_2$ tienne compte de la loi de distribution des durées *TW* des décharges érosives.

En maintenant de plus le gap à une valeur telle que le fil est rectiligne, $F_{mec} = 0$ et l'on peut écrire :

$$\left|F_{rep}\right| = \left|F_{att}\right|$$

Si l'on admet que les tensions électriques durant la décharge *TW* et durant la pause *TS* sont négligeables, on est autorisé à écrire :

$$U^2_{rms} = f \cdot TD_{moy} \cdot U^2_{ign}$$

$U_{ign}$ désigne la tension d'allumage appliquée durant le délai d'attente *TD.*

$TD_{moy}$ désigne une moyenne des délais d'attente comptés sur plusieurs décharges successives. La moyenne des *TD* calculée sur plusieurs périodes successives $TD_{moy}$ est une image de la largeur effective du gap d'usinage. Cela permet traditionnellement d'ajuster le gap à l'aide d'une boucle de régulation bien connue symbolisée en traits gras à la Fig.1.

Par suite l'équilibre d'un fil rectiligne est déterminé par l'égalité :

$$K_I \cdot H \cdot f \cdot TD_{moy} \cdot U^2_{ign} = K_2 \cdot f$$

Cette égalité montre qu'en maintenant $TD_{moy}$ proche d'une valeur telle que le fil soit rectiligne, alors la fréquence d'usinage *f* est un paramètre libre et ajustable à l'aide de la durée de la pause *TS.*

Pour une hauteur de pièce *H* constante et une tension d'allumage $U_{ign}$ constante, on sait qu' il suffit de maintenir $TD_{moy}$ proche d'une valeur convenable pour que le fil reste rectiligne. Dans la pratique pour chaque hauteur de pièce *H* donnée, il existe une valeur particulière $TD_{ref}$ autour de laquelle le régulateur doit maintenir $TD_{moy}$ de sorte à ce que la force de rappel mécanique $F_{mec}$ soit nulle. Dans ces conditions le fil est rectiligne et l'on peut s'en servir notamment pour corriger (rectifier) des imperfections géométriques présentes sur la pièce ébauchée.

Si l'on respecte quelques contraintes, c'est-à-dire : fil rectiligne, tension d'allumage constante, tensions faibles durant la durée de la décharge $TW$ et durant la durée de la pause $TS,$ alors la fréquence n'intervient plus sur l'équilibre d'un fil rectiligne, donc le temps de pause $TS$ devient un paramètre disponible avec lequel on peut agir directement pour faire varier arbitrairement et d'une manière rapide la puissance moyenne d'usinage. Par « arbitrairement » il faut entendre ici que l'utilisateur peut librement adapter son choix à ses propres contraintes.

Le principal avantage est de pouvoir réguler le processus plus rapidement que ne peut le faire une boucle de régulation impliquant les axes de la machine. Par suite nous allons nous intéresser à mesurer le délai d'attente comme le fait traditionnellement une boucle de régulation impliquant la régulation de la position et/ou de la vitesse des axes de la machine, à la différence que les actions correctrices ne seront pas effectuées par des mouvements d'axes ni par des accélérations mécaniques.

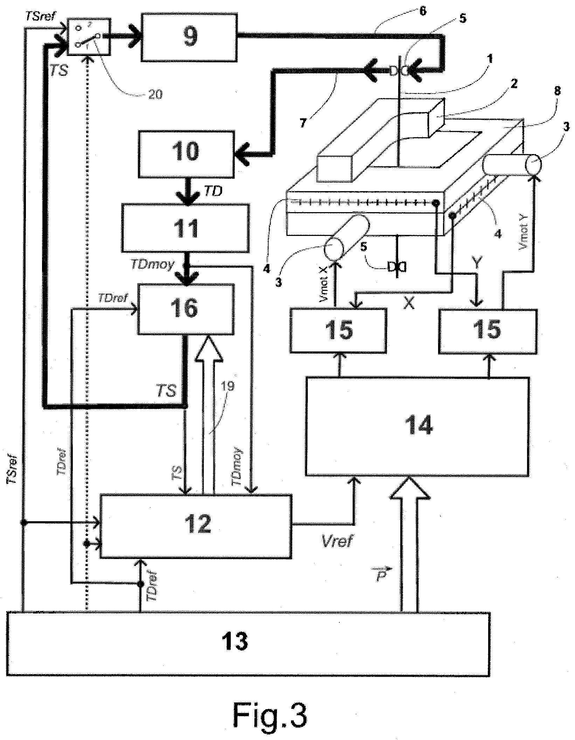

**Un premier mode d'exécution de l'invention** peut être décrit sous forme d'une boucle de régulation rapide, dite boucle interne, impliquant les dispositifs suivants (ci-dessous alinéas a, b, c et d) selon la Fig.3 :

a) un dispositif 10 destiné à mesurer de préférence la tension d'usinage présente aux bornes du gap et à déterminer la durée instantanée du délai d'attente effectif $TD$ précédant chaque décharge érosive $TW$ qui s'amorce aux bornes du gap d'usinage, identique à celui représenté à la Fig.1,

b) un dispositif de calcul 11 permettant de former une valeur moyenne $TD_{moy}$ à partir du délai d'attente $TD$, similaire à celui représenté à la Fig.1,

c) le dispositif nouveau ici est un organe de mesure et de calcul dit régulateur de temps de pause 16 (Fig.3). Ce dernier reçoit pour tâche de calculer, selon une loi prédéterminée, une durée du temps de pause $TS$ en fonction, de préférence, du délai d'attente moyen $TD_{moy}$ et d'une valeur de consigne ou délai de référence $TD_{ref}$ laquelle représente comme précédemment la valeur idéale que la boucle interne doit imposer au délai d'attente moyen $TD_{moy}$.

Les processeurs et périphériques de calcul numériques, utilisés actuellement par les automaticiens, permettent d'élaborer les fonctions de transfert les plus sophistiquées, susceptibles de satisfaire des spécifications extrêmes. Le régulateur de temps de pause de la présente invention est conçu selon le principe du régulateur polynomial RST. Voir « Commande numérique de systèmes linéaires » par le Pr. Roland Longchamp, Presses Polytechniques Universitaires Romandes. Voir également le cours des Pr. Alain Jutard et Maurice Bétemps, INSA de Lyon.

Le régulateur RST de l'invention a été implémenté sur un matériel de type « réseau logique programmable » ou FPGA (field-programmable gate array) de la famille Altéra Cyclone® II. Le modèle EP2C20 utilisé a par exemple la capacité d'intégrer un RST d'ordre 5, avec une précision de 32 bits et un temps d'exécution de 300 ns pour chaque calcul.

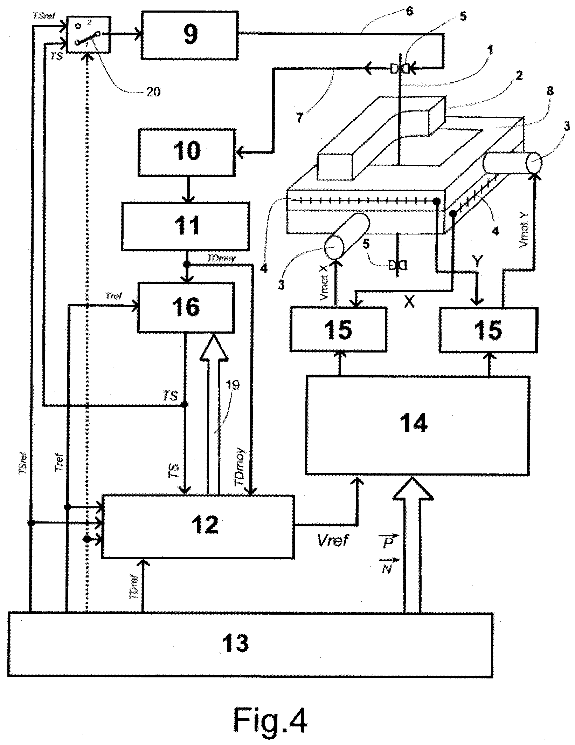

Les différentes configurations de paramètres, ou coefficients de pondération, nécessaires au régulateur RST sont transmises par la connexion 19, (Fig.3 et 4) par le micro - processeur en charge du contrôle de la machine et situé au sein du bloc 12.

Une variante de régulateur RST consiste à implémenter, en lieu et place des coefficients qui pondèrent les variables de réglage, des fonctions non linéaires au moyen de tables. L'entrée dans la table se fait avec la variable en guise d'index ; il en sort une fonction adaptée arbitrairement.

Il est également possible de faire traiter la fonction de transfert par le dit micro - processeur. Dans ce cas des limitations importantes devront être consenties notamment en ce qui concerne la vitesse de traitement.

d) un générateur de décharges érosives 9 relié aux bornes du gap d'usinage, délivrant de préférence des décharges érosives iso - énergétiques, et capable de faire varier immédiatement d'une séquence à la suivante, la durée du temps de pause TS qui sépare les décharges entre elles conformément aux consignes fournies par ledit régulateur de temps de pause 16 branché en amont.

Une boucle de régulation rapide 5, 7, 10, 11, 16, 20, 9, 6, 5, dite boucle interne, est ainsi créée, représentée en traits gras sur la Fig.3.

Partant d'une valeur moyenne effective $TD_{moy}$ du délai d'attente, dite valeur d'entrée, comparée à une valeur cible du délai de référence $TD_{ref}$ le régulateur de temps de pause calcule une durée de temps de pause $TS,$ dite valeur de sortie, que le générateur d'impulsions applique dès la prochaine séquence ($TD, TW, TS$) aux bornes du gap d'usinage. Les fluctuations de tension induites aux bornes du gap, sont mesurées pour former $TD$ puis $TD_{moy}$. Les organes mécaniques de la machine contrairement à la Fig.1 ne sont pas impliqués dans cette boucle interne de régulation. Toutefois, le commutateur 20 placé à l'entrée du générateur d'impulsions 9 permet de revenir à un mode opératoire conventionnel tel qu'illustré par la Fig.1.

Les particularités suivantes doivent être soulignées :

- la boucle est active en permanence et non pas d'une manière intermittente.
- Le temps de pause $TS$ est déterminé en fonction du délai moyen d'attente $TD_{moy}$ effectif de telle sorte que $TS$ diminue quand $TD_{moy} < TD_{ref}$ et que $TS$ augmente quand $TD_{moy} > TD_{ref}$. Le temps de pause $TS$ est ainsi régulé de façon que la différence $TD_{moy}$ - $TD_{ref}$ tende à être annulée.

- la bande passante de la boucle est supérieure à la bande passante typique d'une boucle de régulation mécanique qui utiliserait les axes de la machine comme organes de correction. En l'occurrence, 10 Hz est communément reconnu comme la fréquence de coupure caractérisant les boucles de position en usage sur les machines d'électroérosion. Par suite, les dispositifs de l'invention sont conçus pour que le temps de pause $TS$ puisse varier au moins 20 fois par seconde ; de préférence au moins 50 fois par seconde pour ménager une marge de sécurité ; et au moins 100 fois par seconde dans les cas où une boucle externe de régulation mécanique des axes devrait fonctionner simultanément (voir par exemple les 2ème, 4ème et 6ème modes d'exécution).

- La bande passante de la boucle est déterminée par le nombre d'échantillons nécessaires au calcul d'une moyenne $TD_{moy}$ représentative du gap d'usinage que l'on désire réguler. A la limite, il est envisageable de ne prendre en compte qu'un seul échantillon, $TD_{moy}$ devient alors égal à $TD$.

- Les axes de la machine déplacent le fil à vitesse constante, c'est-à-dire que la boucle de régulation mécanique est ouverte dans le cas de ce premier exemple. Dans d'autres modes d'exécution, elle pourra être réactivée et coopérer avec la boucle rapide.

- Entre deux limites $TD_{moy,mini}$ et $TD_{moy,maxi}$ où l'usinage est établi, la durée du temps de pause $TS$ entre décharges varie d'une manière continue en fonction du délai d'attente moyen $TD_{moy}$. Pour mémoire, on dit qu'une fonction ou une loi est continue quand de petites variations de l'entrée engendrent aussi de petites variations de la sortie. Ces deux limites, $TD_{moy,mini}$ et $TD_{moy,maxi}$ correspondent respectivement à un usinage en court-circuit et à un usinage à vide.

Il est connu que l'usinage ne peut pas s'établir, ni se maintenir, si les deux électrodes (outil et pièce) sont proches du court-circuit ou si au contraire elles sont trop éloignées (usinage à vide). Pour pouvoir usiner par électroérosion, un gap optimal de l'ordre de quelques 100ème de mm doit être maintenu en permanence. Quand l'usinage érosif est établi, le front de matière recule devant l'outil et celui-ci peut alors le suivre. Mais si l'usinage n'est pas encore établi, ou s'il s'est désamorcé, l'outil doit par exemple être maintenu immobile par rapport à la pièce pendant un temps suffisant pour que les décharges érosives s'amorcent. Par suite, si $TD_{moy}<TD_{moy,mini}$ ou bien si $TD_{moy}>TD_{moy,maxi}$ il convient que le régulateur de processus, objet de la présente invention, commute sur un autre mode de régulation pour amorcer l'usinage ou le réamorcer.

Les essais de cette boucle rapide, à titre d'exemple, ont consisté à déterminer le $k^{éme}$ temps de pause $TS_{(k)}$ (ou variable d'entrée au moment $k$) en fonction du délai d'attente moyen $TD_{moy}$ (ou variable de sortie) selon une loi particulière du type:

$$TS_{(k)} = G \cdot \sum \left( TD_{moy} - TD_{ref} \right)$$

Formule dans laquelle le délai de référence $TD_{ref}$ représente la valeur idéale que la boucle de régulation doit imposer au délai d'attente moyen $TD_{moy}$ pour que la force de rappel $F_{mec}$ sur le fil soit nulle. $G$ est le gain de boucle. $TS_{(k)}$ est le $k^{éme}$ temps de pause. La loi ci-dessus impose au temps de pause $TS$ de diminuer, accroissant instantanément la puissance d'usinage, quand le délai d'attente moyen $TD_{moy}$ est inférieur au délai d'attente de référence $TD_{ref}$ et inversement.

Une telle contre mesure est habituellement bannie. En général, quand le gap est trop faible on cherche à réduire précipitamment la puissance car on craint de rompre le fil. En finition, on peut se permettre d'agir à contresens car les régimes utilisés sont peu puissants et ne risquent pas de rompre le fil. Il y a là un effet paradoxal susceptible de produire des résultats inattendus lorsqu'on ose l'exploiter avec des puissances d'usinage modérées.

Le terme intégral, symbolisé par la sommation ($\sum$) assure que la consigne $TD_{ref}$ est respectée sans écart de réglage ; de ce fait, le fil est maintenu rectiligne malgré des perturbations rapides. Un terme proportionnel peut aussi être ajouté à la formule, de même qu'un terme différentiel ; ce qui aura pour effet d'améliorer encore la bande passante.

On peut décrire le fonctionnement de cette boucle rapide d'une manière chronologique pour aider à la compréhension :

- le fil est rectiligne au départ ; il usine latéralement ; il se déplace en suivant une trajectoire parallèle à une paroi de pièce comportant des imperfections géométriques (bosses ou creux) que l'on veut effacer.
- Le fil avance à vitesse constante sur sa trajectoire.
- Il survient par exemple un obstacle sous forme d'un excès de matière (bosse).
- Le gap diminue rapidement ; le délai d'attente moyen $TD_{moy}$ aussi. Le fil pourrait à cet instant être repoussé, cependant :

- Le générateur d'usinage suit immédiatement la diminution rapide du gap en commandant continûment une réduction adaptée du temps de pause *TS* et provoquant ainsi un accroissement proportionné de la puissance d'usinage.
- L'obstacle s'effondre progressivement sous l'effet des décharges érosives avant que le gap n'ait le temps de diminuer d'une manière significative. Traditionnellement, la mesure correctrice aurait consisté à ralentir l'avance du fil jusqu'à inverser sa vitesse dans le pire des cas. Au lieu de cela le système impose d'attaquer plus intensément le front d'usinage ; ce qui ouvre un espace supplémentaire entre fil et pièce et rééquilibre les forces.
- Le fil a été maintenu rectiligne par le contrôle direct de la puissance du générateur qui a contrecarré les perturbations du gap. La séquence s'est déroulée comme si le fil avait le pouvoir d'imposer sa position au front d'usinage.

Dans l'autre cas, quand il survient un déficit de matière sur la trajectoire du fil (creux), un raisonnement similaire peut être conduit. On verra dans ce cas que le temps de pause *TS* a la latitude d'augmenter indéfiniment ; cela permet de réduire la puissance d'usinage vers zéro lorsque l'outil doit épargner une région particulière de la pièce.

La séquence ci-dessus permet de maintenir le fil droit malgré des perturbations sur la prise matière trop rapides pour être traitées par l'asservissement de l'avance des axes. Sans se soucier de la dynamique des axes de la machine, il devient possible de lancer une passe de finition qui permet de corriger les défauts laissés par l'ébauche, qui ne ronge pas les angles externes et qui marque bien le coin dans les angles internes. Quand il n'y a pas de matière à prendre, le fil ne va pas se coller à la pièce. Quand il y a un excès de matière à prendre, le fil n'est pas repoussé momentanément. Il est possible de calibrer à volonté des passes de quelques microns d'épaisseur ceci en décalant simplement la trajectoire du fil de quelques microns. Il devient possible de rectifier des défauts géométriques en une seule passe de finition.

L'invention consiste à utiliser l'information produite par la boucle interne rapide ci-dessus pour commander une boucle plus lente destinée à réguler l'avance des axes. La boucle externe mécanique sur le modèle de celle symbolisée en traits gras sur la Fig.1 fonctionne en même temps que la boucle interne symbolisée en traits gras à la Fig.3. La boucle interne étant beaucoup plus rapide que la boucle externe, le risque d'interférence est écarté. Le régulateur des mouvements d'axes pilote la vitesse le long de la trajectoire en fonction de la différence ($TS - TS_{ref}$). Les mouvements d'axes sont contrôlés selon des techniques courantes. Voir les signaux TS et $TS_{ref}$ sur la Fig.3. C'est-à-dire qu'un temps de pause TS supérieur à la référence $TS_{ref}$ provoque une accélération du mouvement et inversement. Un tel fonctionnement n'améliore pas la précision obtenue à l'aide du 1er mode d'exécution mais permet de gagner du temps dans les passages à vide et d'éviter d'échouer en court-circuit si la quantité de matière à usiner devient trop importante.

Dans le cadre de ce deuxième mode, on peut citer une variante où la boucle interne et la boucle externe fonctionnent avec la même valeur de consigne $TD_{ref}$. Dans ce cas, d'une manière classique, la boucle externe reçoit comme variable d'entrée le délai d'attente moyen $TD_{moy}$ au lieu de *TS* et vise à annuler la différence ($TD_{moy} - TD_{ref}$) entre le délai d'attente moyen $TD_{moy}$ et un délai d'attente de référence $TD_{ref}$, la boucle externe imposant une accélération des axes si ladite différence est positive et inversement.

Dans le cas de la finition, on veut avant tout que le fil soit rectiligne, ce qui conduit à imposer au temps de pause *TS* des variations dans le même sens que les variations de $(TD_{moy}-TD_{ref})$. Par contre, en usinage d'ébauche il est connu que l'on désire rarement maintenir le fil rectiligne car cela ne permet pas d'exploiter la puissance d'usinage disponible. Dans ces conditions, le fil est d'autant plus incurvé dans la direction opposée à l'avance, qu'il reçoit une faible tension mécanique.

Le fil n'étant plus impérativement rectiligne, on peut envisager de piloter le temps de pause *TS* selon d'autres lois que celle symbolisée par la formule ci-dessus. Par exemple, comme exposé ci-après, dans le but de maintenir la puissance d'usinage à une valeur constante.

Dans le cas facultatif de décharges iso - énergétiques, une tension $U_{ign}$ apparaît aux bornes du gap durant un délai d'attente *TD* de durée aléatoire, à l'issue duquel la décharge érosive commence et se poursuit durant un temps *TW* de durée fixe et constante. La décharge érosive est suivie d'un temps de pause *TS* durant lequel aucune tension n'est appliquée aux bornes du gap d'usinage.

La puissance *P* d'usinage à l'intérieur d'une seule période *(TD, TW, TS)* peut s'exprimer selon la formule:

$$P = k_3 . TW \ / \ (TD + TW + TS)$$

$k_3$ étant une constante qui sera définie ci-dessous.

En maintenant la durée de la pause *TS* approximativement constante sur plusieurs périodes successives, la formule s'étend à des valeurs moyennes de délai d'attente $TD_{moy}$ et de puissance $P_{moy}$ :

$$P_{moy} = k_3 . TW / (TD_{moy} + TW + TS)$$

et permet de réguler la puissance moyenne d'usinage $P_{moy}$ à l'aide du temps de pause $TS$.

Selon les valeurs de $TS$ et $TD_{moy}$, la puissance moyenne $P_{moy}$ peut varier de zéro à une valeur maximum $P_{max}$.

Sachant que $TS_{min}$ est la durée minimale du temps de pause $TS$ nécessaire au bon fonctionnement du procédé, on peut définir $P_{max}$ valant $P_{moy}$ quand $TS = TS_{min}$ et quand $TD_{moy} = 0$ ; dans ces conditions:

$$P_{max} = k_3 . TW / (TW + TS_{min})$$

qui donne :

$$k_3 = P_{max} . (1 + TS_{min}/TW)$$

par suite :

$$P_{moy} = P_{max} . TW . (1 + TS_{min}/TW) / (TD_{moy} + TW + TS)$$

Soit $P_{ref}$ une puissance de référence normalisée telle que : $P_{ref} = P_{moy}/P_{max}$ ; $0 < P_{ref} < 1$ par suite :

$$TS = ((TW(1 - P_{ref}) + TS_{min})/P_{ref}) - TD_{moy}$$

En posant

$$T_{ref} = ((TW(1 - P_{ref}) + TS_{min})/P_{ref})$$

On définit une période de référence $T_{ref}$ qui rentre dans l'expression simplifiée suivante:

$$TS = (T_{ref} - TD_{moy})$$

sa différentielle est :

$$\Delta TS = -\Delta TD_{moy}$$

En agissant directement sur le temps de pause $TS$, on peut réguler sans délai la puissance moyenne $P_{moy}$ à proximité d'une valeur cible $(P_{ref}.P_{max})$

L'expression $TS = (T_{ref} - TD_{moy})$ d'une manière différente des modes 1 et 2, impose au temps de pause $TS$ d'augmenter, quand le délai d'attente moyen $TD_{moy}$ diminue et inversement. Il faut noter, d'autre part, que la variation de $TS$ est de même amplitude en valeur absolue que celle de $TD_{moy}$.

En régulant la puissance moyenne d'usinage $P_{moy}$, on peut contrecarrer les variations rapides du gap d'usinage. Cette conclusion peut paraître hâtive. En effet le gap est une grandeur géométrique, donc à première vue accessible seulement par l'intermédiaire de mouvements d'axes. Dans notre présent exemple, l'usinage est établi, l'outil se déplace à vitesse fixe le long de sa trajectoire. Vu dans un référentiel attaché à l'outil, ce dernier est immobile et le régulateur ne fait rien pour le déplacer. Par contre, le front d'usinage sur la pièce, peut être directement mis en mouvement, dans le même référentiel, en agissant sur la quantité $\Delta TS$. En formant $TD_{moy}$ à l'aide d'un petit nombre d'échantillons, voire un seul, il est possible d'anticiper les perturbations du gap. La mécanique des axes de la machine s'occupe de maintenir une largeur du gap où l'usinage puisse s'établir. Le régulateur du temps de pause $TS$ selon l'invention s'occupe de faire mouvoir rapidement le front de matière au gré des variations rapides du gap.

Cette conclusion a une portée générale : l'outil se déplaçant à vitesse constante sur une trajectoire, il est possible, d'une manière permanente, de corriger les variations du gap en faisant varier le temps de pause *TS* entre décharges.

Ceci est possible à condition que la vitesse choisie soit adaptée à la puissance d'usinage à disposition. C'est-à-dire que la puissance moyenne $P_{moy}$ en régime stable doit être inférieure à la puissance maximum $P_{max}$ à disposition. On choisira de préférence $P_{moy}$ = *(1/2)* .$P_{max}$.

La Fig.4 montre que l'unité de commande numérique 12 fournit le signal $T_{ref}$ au régulateur de temps de pause 16. $T_{ref}$ désigne dans ce cas une période d'usinage idéale qui détermine la puissance moyenne d'usinage désirée. L'action correctrice ainsi définie permet de concevoir une boucle de régulation rapide, selon le principe du régulateur polynomial RST déjà cité et similaire à celle symbolisée en traits gras sur la Fig.3. Dans ce cas particulier, la boucle interne stabilise la puissance moyenne appliquée au front d'usinage.

Le front de matière recevant une puissance érosive constante recule à vitesse constante malgré les soubresauts du fil. Par ce moyen il est possible de réguler la vitesse du front d'usinage en contrôlant directement la puissance du générateur.

La vitesse d'avance des guides peut être maintenue constante pourvu qu'elle soit choisie à une valeur compatible avec l'enlèvement de matière déterminée par $T_{ref}$. Pourtant, la progression du fil tendu entre ses deux guides n'est pas pour autant stabilisée. Cependant, peu importe où le fil trouve instantanément son équilibre, l'avance du front d'usinage est régulée par la boucle interne rapide. Le front d'usinage progresse régulièrement malgré que le fil progresse d'une manière non uniforme. De ce fait la surface usinée apparaît exempte de stries.

Dans le présent mode d'exécution, le but est de tirer le profit maximum de la puissance d'usinage à disposition. Le risque de rupture du fil réapparaît et doit être pris en considération. L'expérience a montré que le risque de rupture est lié principalement à la puissance moyenne imposée au fil. Au moyen de $T_{ref}$ l'expression ci-dessus permet de choisir la puissance exactement adaptée au fil dans les conditions particulières de son utilisation. C'est-à-dire la puissance qui assure sa sauvegarde.

D'une manière étonnante, le présent mode d'exécution est compatible avec les différentes stratégies d'usinage couramment utilisées ainsi qu'avec les dispositifs de protection connus des gens du métier et peut fonctionner sans contrainte en même temps que ceux-ci.

D'autre part, il convient de citer un autre mode d'usinage habituellement utilisé sous l'appellation « iso - fréquent ». Comme déjà mentionné ci-dessus, les décharges érosives sont distribuées selon une séquence *(TD, TW, TS)*. Une tension $U_{ign}$ est visible aux bornes du gap durant un délai d'attente *TD* de durée aléatoire, à l'issue duquel la décharge érosive commence et se poursuit durant un temps *TW*. La décharge érosive est suivie d'un temps de pause *TS* durant lequel aucune tension n'est appliquée aux bornes du gap d'usinage. En mode iso - fréquent, en l'occurrence, la durée *(TD + TW)* = *TF* est maintenue constante ; par suite *TD* étant de durée aléatoire, la durée *TW* le devient aussi et la décharge n'est pas iso - énergétique. Mais, comme nous allons le voir ci-après, cela ne compromet pas le principe de régulation de la puissance moyenne d'usinage. Dans ce cas particulier, d'une manière similaire, la puissance moyenne d'usinage $P_{moy}$ s'exprime selon la formule:

$$P_{moy} = k_4 \; . \; (TF - TD_{moy}) \; / \; (TF + TS)$$

Dans laquelle

$$k_4 = P_{max} . \; ( \; (TF + TS_{min}) / TF \; )$$

D'où l'on tire:

$$TS = ( \; (TF(1 - P_{ref}) + TS_{min}) / P_{ref}) - TD_{moy} . \; (TF + TS_{min}) / (TF . P_{ref})$$

Avec comme ci-dessus : $P_{ref}$ = $P_{moy}/P_{max}$ et *0<$P_{ref}$<1*.

En posant

$$T_{ref} = ( \; (TF(1 - P_{ref}) + TS_{min}) / P_{ref})$$

Et $G_{ain} = (TF+TS_{min}) / (TF. P_{ref})$ alors :

$$TS = T_{ref} - G_{ain}.TD_{moy}$$

$$\Delta TS = - G_{ain}.\Delta TD_{moy}$$

Le temps de pause *TS* varie aussi en sens inverse de $TD_{moy}$ mais sa variation en valeur absolue n'est pas, comme précédemment de même amplitude que la variation de $TD_{moy}$ en raison du gain qu'il a été nécessaire d'introduire dans ce cas particulier.

Dans tous les cas où la puissance moyenne $P_{moy}$ s'exprime en fonction du temps d'attente moyen $TD_{moy}$ et du temps de pause *TS,* il est possible de piloter ladite puissance en faisant directement varier ledit temps de pause selon une loi prédéterminée adaptée à chaque application particulière. Ce faisant, on atteint une bande passante supérieure à celle d'un dispositif correcteur mettant en mouvement des pièces mécaniques.

Les deux boucles fonctionnent en même temps. Comme on peut le voir sur la fig. 4, le régulateur des mouvements d'axes pilote l'avance le long de la trajectoire en fonction de la différence ($TD_{moy}$ - $TD_{ref}$) et vise à annuler cette différence. La puissance moyenne est régulée par une boucle interne rapide pendant que le délai d'attente moyen $TD_{moy}$ est régulé par une boucle externe plus lente. Cette dernière fonctionne d'une manière équivalente à celle symbolisée en traits gras sur la Fig.1 ; cependant, son efficacité est accrue par la boucle interne rapide. La boucle externe lente provoquera une accélération du mouvement des axes au vu d'une augmentation du délai d'attente $TD_{moy}$ et inversement. Ce 4ème mode permet d'éviter le choix délicat d'une valeur fixe de vitesse d'avance et améliore considérablement le rendement global.

Dans un mode d'exécution de l'invention, il est proposé de mettre à profit les propriétés que recèlent les relations $TS = (T_{ref}$ - $TD_{moy})$ ou bien $TS = T_{ref}$ - $G_{ain}.TD_{moy}$ ci-dessus, non plus dans des cas d'ébauche, mais dans des cas de finition lorsque le fil travaille latéralement (comme le montre par exemple la Fig.2) et avance à vitesse constante parallèlement à une surface de pièce.

Dans les premier et deuxième modes, le but recherché était de corriger les erreurs géométriques présentes sur la surface de la pièce. Lesdites erreurs ayant été corrigées, il est souvent nécessaire d'affiner l'état de surface sans modifier la géométrie de la pièce. On peut vouloir affiner l'état de surface d'une pièce comportant des erreurs géométriques que l'on décide de tolérer pour des raisons de rentabilité. En effet, la puissance du régime d'usinage final devenant trop faible, les durées d'usinage peuvent être prohibitives.

La boucle de régulation rapide définie selon les troisième et quatrième modes permet de stabiliser la puissance moyenne appliquée au front d'usinage.

En présence d'une pièce de hauteur *H* constante et avec une vitesse d'avance constante, la boucle rapide de régulation de la puissance moyenne d'usinage selon la relation $TS = (T_{ref}$ - $TD_{moy})$ ou bien $TS = T_{ref}$ - $G_{ain}. TD_{moy}$ permet d'usiner un volume constant de matière par unité de déplacement du fil le long de sa trajectoire. Par suite, à l'aide de ce 5ème mode d'exécution, en faisant avancer le fil parallèlement à une surface de pièce de hauteur constante à une vitesse constante adaptée à la courbure de la trajectoire, l'épaisseur de la couche usinée peut être aisément maintenue constante lors d'un usinage de finition latérale. La Fig.4 illustre aussi ce mode.

Si la force de rappel mécanique $F_{mec}$ est voisine de zéro, le fil trouve spontanément une position du haut en bas contre la pièce et usine une couche d'épaisseur régulière. Par suite il est recommandé d'utiliser un fil suffisamment détendu, de sorte à ce qu'il puisse s'incurver librement au voisinage des guidés pour épouser la pièce. Pour ne pas trop détendre le fil on peut également écarter suffisamment les guides de la pièce.

De cette façon, le décalage entre la trajectoire des guides et le pourtour réel de la pièce n'est plus un paramètre critique comme cela est le cas en général dans ce type d'application.

Sachant qu'il existe des régimes d'usinage dont l'enlèvement de matière est extrêmement faible, il devient possible d'affiner un état de surface sans :modifier la géométrie de la pièce. Un autre mode d'exécution de l'invention permet d'affiner l'état de surface mais vise un but supplémentaire. Nous avons vu que la boucle de régulation rapide de ce cinquième mode permet au fil, s'il n'est pas trop tendu, d'épouser la pièce donc de suivre sa géométrie réelle même si les guides s'en écartent. La latitude de manoeuvre ici n'est que de quelques microns et nécessite des précautions.

Par suite en introduisant une deuxième boucle de régulation mécanique externe nous allons pouvoir faire en sorte que les guides suivent également la géométrie réelle de la pièce.

En définissant un vecteur normal *N* à la surface de la pièce (voir Fig.2) il est connu que l'on peut régler le gap d'usinage en imposant des mouvements de correction aux guides selon ledit vecteur $\vec{N}$, pendant que simultanément les mêmes guides effectuent un déplacement à vitesse constante selon un vecteur *P* le long d'une trajectoire plus ou moins parallèle à la pièce. La vitesse selon *P* doit bien entendu être adaptée à la courbure locale du parcours d'usinage.

La deuxième boucle de régulation en question impliquera donc la mécanique des axes de la machine. Les deux boucles, lente et rapide, fonctionnent en même temps. Le régulateur des mouvements d'axes, dans ce cas précis, ajuste la position des guides (et non plus leurs vitesses) selon le vecteur $\vec{N}$ en fonction de la différence ($TD_{moy}$ - $TD_{ref}$). On peut voir sur la Fig.4 les signaux correspondants transmis ainsi que les vecteurs $\vec{P}$ et $\vec{N}$ à l'entrée du régulateur de mouvement des axes.

Il est recommandé de donner à cette boucle mécanique une bande passante aussi rapide que le permet l'inertie des axes déplacés.

Le but de cette boucle mécanique est d'imposer une valeur de $TD_{moy}$ aussi proche que possible de la valeur $TD_{ref}$ qui garantit un fil rectiligne ; même si celui-ci est détendu, il pourra. être maintenu rectiligne et collé à la pièce.

De cette façon, en utilisant un régime d'usinage extrêmement fin, on réalise un dispositif permettant de mesurer la géométrie réelle d'une pièce, plus précisément de mesurer ses erreurs par rapport à une géométrie idéale définie par la trajectoire programmée des guides. On voit bien cependant qu'un fil tendu assurera une meilleure précision de mesure qu'un fil détendu.

Il peut être nécessaire d'effectuer une telle procédure de mesure avant de lancer des passes de rectification ultérieures, par exemple à l'aide du premier mode d'exécution de l'invention. On peut vouloir ne corriger qu'une partie des erreurs et par suite il sera nécessaire de créer des trajectoires spécifiques dans le but d'organiser la phase de rectification.

On peut également imaginer segmenter un parcours d'usinage et utiliser alternativement les modes 6 puis 1 sur chaque segment du parcours.

Il est bien entendu que les modes d'exécution décrits ci-dessus ne présentent aucun caractère limitatif et qu'ils peuvent recevoir toutes modifications désirables à l'intérieur du cadre tel que défini par les revendications indépendantes. En particulier, il est possible de produire une machine à électroérosion combinant certains ou tous les modes d'exécution des dispositifs et des procédés décrits ci-dessus. Une telle machine pourrait présenter un régulateur de processus 12 offrant toutes les possibilités d'usinage en finition et en ébauche décrites ci-dessus et permettant de commuter d'un mode d'usinage à un autre.

La grandeur représentative de la largeur du gap d'usinage pourrait être déterminée d'une autre manière, par exemple par des mesures de résistivité, des mesures différentielles de courant, des mesures optiques, par exemple par laser, des mesures mécaniques, ou des mesures de tout autre paramètre physique corrélé avec cette largeur.

Les unités telles que le dispositif de calcul 11 du délai d'attente moyen, le régulateur du temps de pause 16, le régulateur de processus 12, le régulateur du mouvement des axes 14, les contrôleurs des axes 15 et l'unité de commande numérique 13, pourraient être intégrés toutes ou en parties dans une unité centrale de commande générale programmable.

La boucle externe de régulation des second, quatrième et sixième modes d'exécution peut être commandée séparément de la boucle interne de régulation, ou ces boucles interne et externe pourraient être intimement intégrées.

La boucle interne pourra être permanente ou non permanente avec ou sans réinitialisation périodiques. De même la loi prédéterminée reliant le temps de pause à la largeur du gap pourra être de toute nature, continue ou non continue.

Le dispositif d'usinage pourra être équipé selon l'application choisie d'un, deux ou trois axes ou de tout autre moyen de déplacement relatif entre l'outil et la pièce ; ce moyen pourra être du type translation et/ou rotation.

## Revendications

**1.** Procédé d'usinage par électroérosion selon lequel une pièce (2) est usinée au moyen d'un outil (1) sous forme d'un fil électrode selon un front d'usinage qui recule devant l'outil sous l'effet de décharges érosives,

- la pièce et l'outil, tous deux conducteurs de l'électricité, étant séparés l'un de l'autre par un gap d'usinage,
- une séquence cyclique d'impulsions de tension électrique ($U_{ign}$) étant appliquée entre l'outil et la pièce pour engendrer les décharges érosives,
- l'outil étant mis en mouvement selon au moins un axe par rapport à la pièce,
- les décharges érosives étant séparées entre elles par des temps de pause (TS),
- une grandeur représentative de la largeur du gap d'usinage étant mesurée en temps réel,
**caractérisé en ce que** deux boucles de régulation sont utilisées,
- une boucle externe (5, 7, 10, 11, 12, 14, 15, 3, 5), calculant (12) une consigne de vitesse scalaire (Vref) pour commander l'unité de régulation des mouvements d'axes (14) selon la grandeur représentative de la largeur du gap d'usinage ou selon le temps de pause (TS), l'unité de régulation des mouvements d'axes agissant sur les moteurs (3) qui font déplacer les axes mécaniques, adaptant de ce fait la largeur du gap d'usinage,

une boucle interne (5, 7, 10, 11, 16, 20, 9, 6, 5),
asservissant la puissance moyenne d'usinage $(P_{moy})$ en contrecarrant les variations de la largeur du gap d'usinage en agissant sur le temps de pause *(TS)*, selon une loi prédéterminée laquelle relie le temps de pause (TS) à la grandeur représentative de la largeur du gap d'usinage, adaptant de ce fait rapidement la largeur du gap d'usinage.

2. Procédé d'usinage selon la revendication 1, **caractérisé par le fait que** ladite boucle interne est permanente et pilote la puissance moyenne d'usinage $(P_{moy})$ selon ladite loi prédéterminée sans induire aucun mouvement d'axe.

3. Procédé d'usinage selon la revendication 1 ou 2, **caractérisé en ce que** la grandeur mesurée représentative de la largeur du gap d'usinage est le délai d'attente moyen $(TD_{moy})$ ou durée moyenne du délai d'attente *(TD)* pendant lequel la tension d'amorçage $(U_{ign})$ est présente aux bornes du gap avant l'amorçage d'une décharge érosive *(TW)*.

4. Procédé d'usinage selon la revendication 1, **caractérisé en ce que** le temps de pause (TS) entre décharges érosives est susceptible d'être varié au moins 20 fois par seconde.

5. Procédé d'usinage selon la revendication 1, **caractérisé en ce que** la boucle interne est activée lorsque les décharges érosives sont amorcées, établissant un usinage qui fait reculer le front d'usinage devant l'outil.

6. Procédé d'usinage selon la revendication 3 **caractérisé en ce que** la valeur du délai d'attente moyen $(TD_{moy})$ reste comprise entre deux limites $(TD_{moy,mini}$ et $TD_{moy,maxi})$, ces limites correspondant respectivement à une limite d'usinage en court-circuit et à une limite d'usinage à vide.

7. Procédé d'usinage selon la revendication 3 ou 6, **caractérisé en ce que** la valeur de sortie *(TS)* de la boucle interne diminue quand le délai d'attente moyen $(TD_{moy})$ est inférieur à un délai de référence $(TD_{ref})$ et inversement.

8. Procédé d'usinage selon la revendication 7, **caractérisé en ce que** la boucle interne vise à annuler la différence $(TD_{moy} - TD_{ref})$ entre la valeur d'entrée qui est le délai d'attente moyen $(TD_{moy})$ et la valeur du délai de référence $(TD_{ref})$.

9. Procédé d'usinage selon la revendication 8, **caractérisé en ce que** la boucle interne pilote la puissance d'usinage selon la loi

$$TS_{(k)} = G \cdot \sum \left( TD_{moy} - TD_{ref} \right)$$

$TS_{(k)}$ étant le $k^{éme}$ temps de pause
$TD_{moy}$ étant le délai d'attente moyen
$TD_{ref}$ étant le délai de référence
G étant le gain de la boucle interne.

10. Procédé d'usinage selon la revendication 7, **caractérisé en ce que** les décharges érosives sont des décharges iso - énergétiques.

11. Procédé d'usinage selon la revendication 7, **caractérisé par le fait que** la boucle interne est accompagnée par une boucle externe destinée à effectuer une régulation mécanique.

12. Procédé d'usinage selon la revendication 11, **caractérisé par le fait que** la boucle externe reçoit comme variable d'entrée la variable de sortie (TS) de la boucle interne et vise à annuler la différence $(TS-TS_{ref})$ entre le temps de pause (TS) et une valeur de consigne $(TS_{ref})$, la boucle externe imposant une accélération des axes si ladite différence est positive et inversement.

13. Procédé d'usinage selon la revendication 11, **caractérisé par le fait que** la boucle externe reçoit comme variable d'entrée le délai d'attente moyen $(TD_{moy})$ et vise à annuler la différence $(TD_{moy} - TD_{ref})$ entre le délai d'attente moyen $(TD_{moy})$ et un délai de référence $(TD_{ref})$, la boucle externe imposant une accélération des axes si ladite différence est positive et inversement.

14. Procédé d'usinage selon la revendication 3, **caractérisé en ce que** la boucle interne vise à maintenir la puissance moyenne d'usinage ($P_{moy}$) à une valeur constante.

**15.** Procédé d'usinage selon la revendication 14, **caractérisé en ce que** la boucle interne impose au temps de pause *(TS)* d'augmenter quand le délai d'attente moyen *($TD_{moy}$)* diminue et inversement.

**16.** Procédé d'usinage selon la revendication 14, **caractérisé par** une boucle externe destinée à effectuer une régulation mécanique, laquelle vise à annuler la différence *($TD_{moy}$-$TD_{ref}$)* entre le délai d'attente moyen *($TD_{moy}$)* et un délai d'attente de référence *($TD_{ref}$)*, la boucle externe imposant une accélération du mouvement dans une direction parallèle à la trajectoire quand ladite différence est positive et inversement.

**17.** Procédé d'usinage selon la revendication 14, **caractérisée en ce que** le fil avance parallèlement à une surface de la pièce de hauteur constante à une vitesse constante adaptée à la courbure de la trajectoire et usine latéralement une épaisseur de matière constante.

**18.** Procédé d'usinage selon la revendication 17, **caractérisée en ce qu'**une boucle de régulation mécanique externe supplémentaire fonctionne simultanément à la boucle interne et impose des mouvements de correction selon un vecteur normal à la surface de la pièce.

**19.** Procédé d'usinage selon la revendication 18, **caractérisée en ce que** la boucle de régulation externe supplémentaire vise à annuler la différence *($TD_{moy}$-$TD_{ref}$)* entre le délai d'attente moyen effectif *($TD_{moy}$)* et un délai d'attente de référence *($TD_{ref}$)*, la boucle de régulation externe supplémentaire imposant à l'outil de se rapprocher de la pièce quand ladite différence est positive et inversement.

**20.** Dispositif d'usinage par électroérosion comprenant :

- un outil (1) sous forme d'un fil électrode destiné à usiner une pièce (2) selon un front d'usinage qui recule sous l'effet de décharges électriques érosives lesquelles éclatent aux sein d'un gap d'usinage situé entre l'outil (1) et la pièce (2) tous deux conducteurs de l'électricité,
- un ensemble mécanique (3, 4, 5, 8) permettant d'effectuer un mouvement relatif entre l'outil sous forme d'un fil électrode et la pièce selon au moins un axe,
- un générateur de décharges érosives (9) permettant de produire cycliquement des impulsions de tension électrique *($U_{ign}$)* susceptibles d'amorcer aux sein du gap d'usinage des décharges électriques érosives séparées par un temps de pause *(TS)*,
- un dispositif de mesure d'une grandeur représentative de la largeur du gap d'usinage,
**caractérisé en ce qu'**il comprend deux boucles de régulation,
- une boucle externe (5, 7, 10, 11, 12, 14, 15, 3, 5), calculant (12) une consigne de vitesse scalaire (Vref) pour commander l'unité de régulation des mouvements d'axes (14) selon la grandeur représentative de la largeur du gap d'usinage ou selon le temps de pause *(TS)*, l'unité de régulation des mouvements d'axes agissant sur les moteurs (3) qui font déplacer les axes mécaniques, adaptant de ce fait la largeur du gap d'usinage, une boucle interne (5, 7, 10, 11, 16, 20, 9, 6, 5), adaptée pour asservissant la puissance moyenne d'usinage *($P_{moy}$)* et contrecarrant les variations de la largeur du gap d'usinage en agissant sur le temps de pause (TS) selon une loi prédéterminée laquelle relie le temps de pause (TS) à la grandeur représentative de la largeur du gap d'usinage, adaptant de ce fait rapidement la largeur du gap d'usinage.

**21.** Dispositif d'usinage selon la revendication 20, **caractérisé en ce que** la boucle interne comporte les éléments suivants :

- un dispositif détecteur (10) destiné à mesurer la tension d'usinage (7) présente aux bornes du gap et à déterminer la durée instantanée du délai d'attente *(TD)* précédant chaque décharge érosive *(TW)*,
- un dispositif de calcul (11) branché au dispositif détecteur (10) et permettant de former ledit délai d'attente moyen *($TD_{moy}$)*,
- un régulateur de temps de pause (16) branché au dispositif de calcul (11) destiné à calculer un temps de pause *(TS)* en fonction du délai d'attente moyen *($TD_{moy}$)* et d'une consigne *($TD_{ref}$ ou $T_{ref}$)*,
- le générateur de décharges érosives (9) étant relié au régulateur de temps de pause (16) et aux bornes du gap d'usinage (1,2), ce générateur étant agencé pour faire varier immédiatement le temps de pause *(TS)* entre décharges érosives conformément aux valeurs de temps de pause calculées par ledit régulateur de temps de pause (16).

**22.** Dispositif d'usinage selon la revendication 21, **caractérisé en ce que** le régulateur de temps de pause (16) comprend un régulateur RST destiné à calculer la valeur du temps de pause *(TS).*

**23.** Dispositif d'usinage selon la revendication 22 **caractérisé en ce que** le régulateur RST est implémenté sur un matériel de type réseau logique programmable ou FPGA (field - programmable gate array).

**Patentansprüche**

**1.** Verfahren zur Bearbeitung durch Elektroerosion, gemäß dem ein Bauteil (2) mittels eines Werkzeugs (1) in Form einer Drahtelektrode gemäß einer Bearbeitungsstirnseite bearbeitet wird, die unter der Wirkung von erodierenden Entladungen vor dem Werkzeug zurückweicht,

- wobei das Bauteil und das Werkzeug, beide stromleitend, durch einen Bearbeitungsspalt voneinander getrennt sind,
- wobei eine zyklische Folge elektrischer Spannungsimpulse ($U_{ign}$) zwischen dem Werkzeug und dem Bauteil angelegt werden, um die erodierenden Entladungen zu erzeugen,
- wobei das Werkzeug gemäß mindestens einer Achse bezüglich des Bauteils in Bewegung versetzt wird,
- wobei die erodierenden Entladungen durch Pausenzeiten (TS) voneinander getrennt sind,
- wobei eine für die Breite des Bearbeitungsspalts repräsentative Größe in Echtzeit gemessen wird,
**dadurch gekennzeichnet, dass** zwei Regelkreise verwendet werden,
- ein äußerer Kreis (5, 7, 10, 11, 12, 14, 15, 3, 5), der einen skalaren Geschwindigkeitssollwert (Vref) berechnet (12), um die Regelungseinheit der Achsenbewegungen (14) gemäß der für die Breite des Bearbeitungsspalts repräsentativen Größe oder gemäß der Pausenzeit (TS) zu steuern, wobei die Regelungseinheit der Achsenbewegungen auf die Motoren (3) einwirkt, die die mechanischen Achsen verschieben, wodurch die Breite des Bearbeitungsspalts angepasst wird,
- ein innerer Kreis (5, 7, 10, 11, 16, 20, 9, 6, 5), der die mittlere Bearbeitungsleistung ($P_{moy}$) regelt, indem er den Änderungen der Breite des Bearbeitungsspalts entgegenwirkt, indem er auf die Pausenzeit (TS) gemäß einem vorbestimmten Gesetz einwirkt, das die Pausenzeit (TS) mit der für die Breite des Bearbeitungsspalts repräsentativen Größe verbindet, wodurch die Breite des Bearbeitungsspalts schnell angepasst wird.

**2.** Bearbeitungsverfahren nach Anspruch 1, **dadurch gekennzeichnet, dass** der innere Kreis permanent ist und die mittlere Bearbeitungsleistung ($P_{moy}$) gemäß dem vorbestimmten Gesetz steuert, ohne irgendeine Achsbewegung einzuführen.

**3.** Bearbeitungsverfahren nach Anspruch 1 oder 2, **dadurch gekennzeichnet, dass** die für die Breite des Bearbeitungsspalts repräsentative gemessene Größe die mittlere Wartezeit ($TD_{moy}$) oder mittlere Dauer der Wartezeit (TD) ist, während der die Zündspannung ($U_{ign}$) vor dem Zünden einer erodierenden Entladung (TW) an den Klemmen des Spalts vorhanden ist.

**4.** Bearbeitungsverfahren nach Anspruch 1, **dadurch gekennzeichnet, dass** die Pausenzeit (TS) zwischen erodierenden Entladungen mindestens 20 Mal pro Sekunde variiert werden kann.

**5.** Bearbeitungsverfahren nach Anspruch 1, **dadurch gekennzeichnet, dass** der innere Kreis aktiviert wird, wenn die erodierenden Entladungen gezündet werden, wodurch eine Bearbeitung festgelegt wird, die die Bearbeitungsstirnseite vor dem Werkzeug zurückweichen lässt.

**6.** Bearbeitungsverfahren nach Anspruch 3, **dadurch gekennzeichnet, dass** der Wert der mittleren Wartezeit ($TD_{moy}$) zwischen zwei Grenzen ($TD_{moy,mini}$ und $TD_{moy,maxi}$) liegend bleibt, wobei diese Grenzen einer Kurzschluss-Bearbeitungsgrenze bzw. einer Vakuum-Bearbeitungsgrenze entsprechen.

**7.** Bearbeitungsverfahren nach Anspruch 3 oder 6, **dadurch gekennzeichnet, dass** der Ausgangswert (TS) des inneren Kreises abnimmt, wenn die mittlere Wartezeit ($TD_{moy}$) unter einer Bezugszeitspanne ($TD_{ref}$) liegt und umgekehrt.

**8.** Bearbeitungsverfahren nach Anspruch 7, **dadurch gekennzeichnet, dass** der innere Kreis darauf abzielt, die Differenz ($TD_{moy} - TD_{ref}$) zwischen dem Eingangswert, der die mittlere Wartezeit ($TD_{moy}$) ist, und dem Wert der Bezugszeitspanne ($TD_{ref}$) zu aufzuheben.

9. Bearbeitungsverfahren nach Anspruch 8, **dadurch gekennzeichnet, dass** der innere Kreis die Verarbeitungsleistung gemäß dem folgenden Gesetz steuert

$$TS_{(k)} = G \cdot \Sigma (TD_{moy} - TD_{ref}),$$

wobei

$TS_{(k)}$ die k-te Pausenzeit ist,
$TD_{moy}$ die mittlere Wartezeit ist,
$TD_{ref}$ die Bezugswartedauer ist,
G die Verstärkung des inneren Kreises ist.

10. Bearbeitungsverfahren nach Anspruch 7, **dadurch gekennzeichnet, dass** die erodierenden Entladungen isoenergetische Entladungen sind.

11. Bearbeitungsverfahren nach Anspruch 7, **dadurch gekennzeichnet, dass** der innere Kreis von einem äußeren Kreis begleitet wird, der dazu bestimmt ist, eine mechanische Regelung auszuführen.

12. Bearbeitungsverfahren nach Anspruch 11, **dadurch gekennzeichnet, dass** der äußere Kreis als Eingangsvariable die Ausgangsvariable (TS) des inneren Kreises empfängt und darauf abzielt, die Differenz ($TS-TS_{ref}$) zwischen der Pausenzeit (TS) und einem Sollwert ($TS_{ref}$) aufzuheben, wobei der äußere Kreis eine Beschleunigung der Achsen vorgibt, wenn die Differenz positiv ist, und umgekehrt.

13. Bearbeitungsverfahren nach Anspruch 11, **dadurch gekennzeichnet, dass** der äußere Kreis als Eingangsvariable die mittlere Wartezeit ($TD_{moy}$) empfängt und darauf abzielt, die Differenz ($TD_{moy}-TD_{ref}$) zwischen der mittleren Wartezeit ($TD_{moy}$) und einer Bezugszeitspanne ($TD_{ref}$) aufzuheben, wobei der äußere Kreis eine Beschleunigung der Achsen vorgibt, wenn die Differenz positiv ist, und umgekehrt.

14. Bearbeitungsverfahren nach Anspruch 3, **dadurch gekennzeichnet, dass** der innere Kreis darauf abzielt, die mittlere Bearbeitungsleistung ($P_{moy}$) auf einem konstanten Wert zu halten.

15. Bearbeitungsverfahren nach Anspruch 14, **dadurch gekennzeichnet, dass** der innere Kreis der Pausenzeit (TS) vorgibt, zuzunehmen, wenn die mittlere Wartezeit ($TD_{moy}$) abnimmt, und umgekehrt.

16. Bearbeitungsverfahren nach Anspruch 14, **gekennzeichnet durch** einen äußeren Kreis, der dazu bestimmt ist, eine mechanische Regelung auszuführen, die darauf abzielt, die Differenz ($TD_{moy}-TD_{ref}$) zwischen der mittleren Wartezeit ($TD_{moy}$) und einer Bezugswartezeit ($TD_{ref}$) aufzuheben, wobei der äußere Kreis eine Beschleunigung der Bewegung in einer Richtung parallel zur Bahn vorgibt, wenn die Differenz positiv ist, und umgekehrt.

17. Bearbeitungsverfahren nach Anspruch 14, **dadurch gekennzeichnet, dass** der Draht sich parallel zur einer Fläche des Bauteils konstanter Höhe mit einer konstanten Geschwindigkeit vorwärtsbewegt, die an die Krümmung der Bahn angepasst ist, und eine konstante Materialdicke seitlich bearbeitet.

18. Bearbeitungsverfahren nach Anspruch 17, **dadurch gekennzeichnet, dass** ein zusätzlicher äußerer mechanischer Regelkreis gleichzeitig mit dem inneren Kreis arbeitet und Korrekturbewegungen gemäß einem Vektor normal zur Fläche des Bauteils vorgibt.

19. Bearbeitungsverfahren nach Anspruch 18, **dadurch gekennzeichnet, dass** der zusätzliche äußere Regelkreis darauf abzielt, die Differenz ($TD_{moy}-TD_{ref}$) zwischen der effektiven mittleren Wartezeit ($TD_{moy}$) und einer Bezugswartezeit ($TD_{ref}$) aufzuheben, wobei der zusätzliche äußere Regelkreis dem Werkzeug vorgibt, sich dem Bauteil anzunähern, wenn die Differenz positiv ist, und umgekehrt.

20. Vorrichtung zur Bearbeitung durch Elektroerosion, die enthält:

- ein Werkzeug (1) in Form einer Drahtelektrode, das dazu bestimmt ist, ein Bauteil (2) gemäß einer Bearbeitungsstirnseite zu bearbeiten, die unter der Wirkung von erodierenden elektrischen Entladungen zurückweicht, die innerhalb eines Bearbeitungsspalts ausbrechen, der sich zwischen dem Werkzeug (1) und dem Bauteil (2) befindet, die beide stromleitend sind,

- eine mechanische Einheit (3, 4, 5, 8), die es ermöglicht, eine relative Bewegung zwischen dem Werkzeug in Form einer Drahtelektrode und dem Bauteil gemäß mindestens einer Achse auszuführen,
- einen Generator erodierender Entladungen (9), der es ermöglicht, zyklisch elektrische Spannungsimpulse ($U_{ign}$) zu erzeugen, die innerhalb des Bearbeitungsspalts erodierende elektrische Entladungen auslösen können, die durch eine Pausenzeit (TS) getrennt sind,
- eine Messvorrichtung einer für die Breite des Bearbeitungsspalts repräsentativen Größe,
**dadurch gekennzeichnet, dass** sie zwei Regelkreise enthält,
- einen äußeren Kreis (5, 7, 10, 11, 12, 14, 15, 3, 5), der einen skalaren Geschwindigkeitssollwert (Vref) berechnet (12), um die Regelungseinheit der Achsenbewegungen (14) gemäß der für die Breite des Bearbeitungsspalts repräsentativen Größe oder gemäß der Pausenzeit (TS) zu steuern, wobei die Regelungseinheit der Achsenbewegungen auf die Motoren (3) einwirkt, die die mechanischen Achsen verschieben, wodurch die Breite des Bearbeitungsspalts angepasst wird,
- einen inneren Kreis (5, 7, 10, 11, 16, 20, 9, 6, 5), der die mittlere Bearbeitungsleistung ($P_{moy}$) regelt und den Änderungen der Breite des Bearbeitungsspalts entgegenwirkt, indem er auf die Pausenzeit (TS) gemäß einem vorbestimmten Gesetz einwirkt, das die Pausenzeit (TS) mit der für die Breite des Bearbeitungsspalts repräsentativen Größe verbindet, wodurch die Breite des Bearbeitungsspalts schnell angepasst wird.

21. Bearbeitungsvorrichtung nach Anspruch 20, **dadurch gekennzeichnet, dass** der innere Kreis die folgenden Elemente aufweist:

- eine Erfassungsvorrichtung (10), die dazu bestimmt ist, die an den Klemmen des Spalts vorhandene Bearbeitungsspannung (7) zu messen und die augenblickliche Dauer der Wartezeit (TD) zu bestimmen, die vor jeder erodierenden Entladung (TW) liegt,
- eine Rechenvorrichtung (11), die an die Erfassungsvorrichtung (10) angeschlossen ist und es ermöglicht, die mittlere Wartezeit ($TD_{moy}$) zu bilden,
- einen an die Rechenvorrichtung (11) angeschlossenen Pausenzeitregler (16), der dazu bestimmt ist, eine Pausenzeit (TS) abhängig von der mittleren Wartezeit ($TD_{moy}$) und einem Sollwert ($TD_{ref}$ oder $T_{ref}$) zu berechnen,
- wobei der Generator erodierender Entladungen (9) mit dem Pausenzeitregler (16) und den Klemmen des Bearbeitungsspalts (1, 2) verbunden ist, wobei dieser Generator eingerichtet ist, um die Pausenzeit (TS) zwischen erodierenden Entladungen augenblicklich entsprechend den vom Pausenzeitregler (16) berechneten Pausenzeitwerten variieren zu lassen.

22. Bearbeitungsvorrichtung nach Anspruch 21, **dadurch gekennzeichnet, dass** der Pausenzeitregler (16) einen Regler RST enthält, der dazu bestimmt ist, den Wert der Pausenzeit (TS) zu berechnen.

23. Bearbeitungsvorrichtung nach Anspruch 22, **dadurch gekennzeichnet, dass** der Regler RST auf einer Hardware der Art programmierbares logisches Netzwerk oder FPGA (field-programmable gate array) implementiert wird.

## Claims

1. Electrical discharge machining method in which a part (2) is machined by means of a tool (1) taking the form of an electrode wire along a machining front that retreats before the tool under the effect of erosive discharges:

- the part and the tool, both of which are electrically conductive, being separated from one another by a machining gap;
- a cyclic sequence of voltage pulses ($U_{ign}$) being applied between the tool and the part so as to generate the erosive discharges;
- the tool being set in motion along at least one axis with respect to the part;
- the erosive discharges being separated from one another by pause times (*TS*);
- a quantity representative of the width of the machining gap being measured in real time,

**characterized in that** two feedback loops are employed:

- an external loop (5, 7, 10, 11, 12, 14, 15, 3, 5), calculating (12) a scalar velocity setpoint (*Vref*) for controlling the unit for regulating the motions of axes (14) according to the quantity representative of the width of the machining gap or according to the pause time (*TS*), the unit for regulating the motions of axes acting on the motors (3) that move the mechanical axes, thereby adjusting the width of the machining gap;
- an internal loop (5, 7, 10, 11, 16, 20, 9, 6, 5), feedback-controlling the average machining power ($P_{moy}$) while counteracting the variations in the width of the machining gap by acting on the pause time ($TS$), according to a predetermined law relating the pause time ($TS$) to the quantity representative of the width of the machining gap, thereby quickly adjusting the width of the machining gap.

2. Machining method according to Claim 1, **characterized by** the fact that said internal loop is permanent and drives the average machining power ($P_{moy}$) according to said predetermined law without causing any axial motion.

3. Machining method according to Claim 1 or 2, **characterized in that** the measured quantity that is representative of the width of the machining gap is the average waiting period ($TD_{moy}$) or average duration of the waiting period ($TD$) for which the ignition voltage ($U_{ign}$) is present across the terminals of the gap before the ignition of an erosive discharge ($TW$).

4. Machining method according to Claim 1, **characterized in that** the pause time ($TS$) between erosive discharges is capable of being varied at least 20 times a second.

5. Machining method according to Claim 1, **characterized in that** the internal loop is activated when the erosive discharges are ignited, setting up a machining operation that makes the machining front retreat before the tool.

6. Machining method according to Claim 3, **characterized in that** the value of the average waiting period ($TD_{moy}$) remains between two limits ($TD_{moy,mini}$ and $TD_{moy,maxi}$), these limits corresponding to a short-circuit machining limit and to an open-circuit machining limit, respectively.

7. Machining method according to Claim 3 or 6, **characterized in that** the output value ($TS$) of the internal loop decreases when the average waiting period ($TD_{moy}$) falls below a reference period ($TD_{ref}$) and vice versa.

8. Machining method according to Claim 7, **characterized in that** the internal loop aims to cancel out the difference ($TD_{moy}$ - $TD_{ref}$) between the input value, which is the average waiting period ($TD_{moy}$), and the value of the reference period ($TD_{ref}$).

9. Machining method according to Claim 8, **characterized in that** the internal loop drives the machining power according to the law:

$$TS_{(k)} = G \cdot \sum \left( TD_{moy} - TD_{ref} \right)$$

where:

$TS_{(k)}$ is the kth pause time;
$TD_{moy}$ is the average waiting period;
$TD_{ref}$ is the reference period;
$G$ is the gain of the internal loop.

10. Machining method according to Claim 7, **characterized in that** the erosive discharges are iso-energetic discharges.

11. Machining method according to Claim 7, **characterized by** the fact that the internal loop is accompanied by an external loop that is intended to perform a mechanical feedback function.

12. Machining method according to Claim 11, **characterized by** the fact that the external loop receives, as input variable, the output variable ($TS$) from the internal loop and aims to cancel out the difference ($TS$ - $TS_{ref}$) between the pause time ($TS$) and a setpoint value ($TS_{ref}$), the external loop imposing an acceleration on the axes if said difference is positive and vice versa.

13. Machining method according to Claim 11, **characterized by** the fact that the external loop receives, as input variable, the average waiting period ($TD_{moy}$) and aims to cancel out the difference ($TD_{moy}$ - $TD_{ref}$) between the average waiting period ($TD_{moy}$) and a reference period ($TD_{ref}$), the external loop imposing an acceleration on the axes if said difference is positive and vice versa.

**14.** Machining method according to Claim 3, **characterized in that** the internal loop aims to keep the average machining power ($P_{moy}$) at a constant value.

**15.** Machining method according to Claim 14, **characterized in that** the internal loop makes the pause time ($TS$) increase when the average waiting period ($TD_{moy}$) decreases and vice versa.

**16.** Machining method according to Claim 14, **characterized by** an external loop that is intended to perform a mechanical feedback function, which aims to cancel out the difference ($TD_{moy}$ - $TD_{ref}$) between the average waiting period ($TD_{moy}$) and a reference waiting period ($TD_{ref}$), the external loop imposing an acceleration on the motion in a direction that is parallel to the trajectory when said difference is positive and vice versa.

**17.** Machining method according to Claim 14, **characterized in that** the wire advances parallel to a surface of the part of constant height at a constant velocity that is matched to the curvature of the trajectory and laterally machines a constant thickness of material.

**18.** Machining method according to Claim 17, **characterized in that** an additional external mechanical feedback loop operates at the same time as the internal loop and imposes corrective motions along a vector normal to the surface of the part.

**19.** Machining method according to Claim 18, **characterized in that** the additional external feedback loop aims to cancel out the difference ($TD_{moy}$ - $TD_{ref}$) between the actual average waiting period ($TD_{moy}$) and a reference waiting period ($TD_{ref}$), the additional external feedback loop making the tool move closer to the part when said difference is positive and vice versa.

**20.** Electrical discharge machining device comprising:

- a tool (1) taking the form of an electrode wire that is intended to machine a part (2) along a machining front that retreats under the effect of erosive electrical discharges sparking within a machining gap located between the tool (1) and the part (2), both of which are electrically conductive;
- a mechanical assembly (3, 4, 5, 8) allowing a relative motion between the tool taking the shape of an electrode wire and the part to be performed along at least one axis;
- an erosive discharge generator (9) allowing voltage pulses ($U_{ign}$) to be cyclically produced, which voltage pulses are capable of igniting, within the machining gap, erosive electrical discharges that are separated by a pause time ($TS$) ;
- a device for measuring a quantity representative of the width of the machining gap, **characterized in that** it comprises two feedback loops:
- an external loop (5, 7, 10, 11, 12, 14, 15, 3, 5), calculating (12) a scalar velocity setpoint ($Vref$) for controlling the unit for regulating the motions of axes (14) according to the quantity representative of the width of the machining gap or according to the pause time *(TS),* the unit for regulating the motions of axes acting on the motors (3) that move the mechanical axes, thereby adjusting the width of the machining gap;
- an internal loop (5, 7, 10, 11, 16, 20, 9, 6, 5), suitable for feedback-controlling the average machining power ($P_{moy}$) and counteracting the variations in the width of the machining gap by acting on the pause time ($TS$) according to a predetermined law relating the pause time ($TS$) to the quantity representative of the width of the machining gap, thereby quickly adjusting the width of the machining gap.

**21.** Machining device according to Claim 20, **characterized in that** the internal loop includes the following elements:

- a detector device (10) intended to measure the machining voltage (7) present across the terminals of the gap and to determine the instantaneous duration of the waiting period ($TD$) preceding each erosive discharge ($TW$);
- a calculating device (11) connected to the detector device (10) and allowing said average waiting period ($TD_{moy}$) to be formed;
- a pause time regulator (16) connected to the calculating device (11), intended to calculate a pause time ($TS$) according to the average waiting period ($TD_{moy}$) and according to a setpoint ($TD_{ref}$ or $T_{ref}$);
- the erosive discharge generator (9) being connected to the pause time regulator (16) and to the terminals of the machining gap (1, 2), this generator being arranged to immediately vary the pause time ($TS$) between erosive discharges in accordance with the pause time values calculated by said pause time regulator (16).

**22.** Machining device according to Claim 21, **characterized in that** the pause time regulator (16) comprises an RST controller that is intended to calculate the value of the pause time (*TS*).

**23.** Machining device according to Claim 22, **characterized in that** the RST controller is implemented on hardware such as an FPGA (field-programmable gate array).

Fig.1

Fig.2a

Fig.2b

EP 2 180 968 B1

Fig.3

Fig.4

**EP 2 180 968 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3857011 A
- US 4363949 A
- EP 0521193 A
- US 5824986 A
- US 6320151 B
- US 6252191 B
- EP 1316380 A